# EUROPÄISCHE PATENTSCHRIFT

(11) **EP 0 931 015 B1**
(45) Veröffentlichungstag und Bekanntmachung des Hinweises auf die Patenterteilung: **20.02.2002**
(21) Anmeldenummer: 97912088.8
(22) Anmeldetag: 01.10.1997
(51) Int. Cl.: C01B 17/88

(54) **VERFAHREN ZUR AUFKONZENTRIERUNG VON GEBRAUCHTEN SCHWEFELSÄUREN**
METHOD FOR UPGRADING USED SULFURIC ACIDS
PROCEDE DE RECONCENTRATION D'ACIDES SULFURIQUES USES

(30) Priorität: 14.10.1996 DE 19642328
(43) Veröffentlichungstag der Anmeldung: 28.07.1999
(73) Patentinhaber: BAYER AG, 51368 Leverkusen (DE)
(72) Erfinder: BECKHAUS, Heiko, D-51381 Leverkusen (DE); MÜNNIG, Jürgen, D-41564 Kaarst (DE); LORENZ, Wolfgang, D-41540 Dormagen (DE); SCHUMACHER, Karl, D-51381 Leverkusen (DE)
(86) Internationale Anmeldenummer: EP9705380
(87) Internationale Veröffentlichungsnummer: WO9816464

(56) Entgegenhaltungen:
- EP-A- 0 406 632
- US-A- 4 409 064
- US-A- 5 075 097
- US-A- 5 139 544

## Beschreibung

Die vorliegende Erfindung betrifft ein Verfahren zur Aufkonzentrierung von gebrauchten Schwefelsäuren, insbesondere von Schwefelsäuren, die bei Nitrierung von Kohlenwasserstoffen mit Salpetersäure in Gegenwart von Schwefelsäure anfallen, wobei unter Vakuum ein- oder mehrstufig aufkonzentriert wird.

Die Entsorgung oder Wiederverwertung von bei der Herstellung von Nitrierprodukten anfallender gebrauchter Schwefelsäure stellt insofern ein Problem dar, als die Schwefelsäure einen wesentlichen Anteil der Herstellkosten im Prozess verursacht. Das führte u.a. zu Versuchen, den Einsatz von Schwefelsäure überhaupt zu vermeiden (Kirk-Othmer, Encyl. Chem. Techn. 3. Aufl. 1981, Bd. 15, S. 928-929).

Das am meisten verbreitete Verfahren zur Eindampfung von gebrauchter Schwefelsäure ist das sogenannte Pauling-Verfahren [Bodenbrenner, von Plessen, Vollmüller, Dechema-Monogr. 86 (1980), 197], bei dem eine relativ reine 96 %ige Schwefelsäure zurückgewonnen werden kann.
Die Nachteile dieses Verfahrens liegen in den hohen spezifischen Investitions- und Betriebskosten. Durch oxidative Zerstörung eines Teils der organischen Verbindungen entstehen außerdem SO₂- und NOₓ-Nebenprodukte.

Bei den meisten Vakuumaufkonzentrierungen von gebrauchten Schwefelsäuren enthalten die Brüden neben anderen Verbindungen auch nennenswerte Mengen an Schwefelsäuren. Trotz der Installation von destillativen Trennstufen wird Schwefelsäure mitgerissen und findet sich im Kondensat und damit im Abwasser wieder.

Die Vermeidung dieser Probleme erwies sich bisher als technisch und wirtschaftlich sehr aufwendig. Gemäß US 4 409 064 wird bei der Aufkonzentrierung von gebrauchten Schwefelsäuren oberhalb einer Packung eine Wasserschicht aufrecht erhalten und viel Wasser auf einen Verteiler versprüht, um die Schwefelsäure aus den Brüden auszuwaschen.

Aufgabe der vorliegenden Erfindung war es daher, ein Verfahren zur Verfügung zu stellen, das es gestattet, die Schwefelsäure in den Brüden auf technisch einfache Weise und möglichst vollständig daraus zu entfernen und für die Schwefelsäureaufkonzentration zurückzugewinnen.

Diese Aufgabe konnte überraschenderweise durch das erfindungsgemäße Verfahren gelöst werden, indem die Brüden bei der Schwefelsäureaufkonzentrierung mit wenig Wasser, Kondensat oder verdünnter Schwefelsäure abgespritzt werden.

Gegenstand der Erfindung ist ein Verfahren zur Aufkonzentrierung gebrauchter Schwefelsäuren, in welchem
a) gebrauchte Schwefelsäure einem Verdampfer zugeführt wird,
b) diese gebrauchte Schwefelsäure auf Temperaturen aufgeheizt wird, die ausreichen, daß bei Unterdruck Wasser verdampft und sich eine wasserdampfbeladene Gasphase bildet, die außerdem Schwefelsäure enthält, und daß ein aufkonzentriertes Sumpfprodukt anfällt,
c) die Gasphase oberhalb des Sumpfproduktes mit einer wäßrigen Phase in einer Menge von 10 bis 1 000 kg/h, besonders bevorzugt von 40 bis 150 kg/h, pro 1 000 kg Brüden/h in Kontakt gebracht wird, so daß die in der Gasphase enthaltene Schwefelsäure vor der wäßrigen Phase aufgenommen wird und eine Gasphase, die nahezu von Schwefelsäure befreit ist, erhalten wird,
d) die wäßrige, Schwefelsäure enthaltene Phase in Form von Tropfen, die sich am Demister bilden, der oberhalb des Sumpfes angebracht ist, in den Sumpf zurückgeführt wird.
dadurch gekennzeichnet ist, daß die wäßrige Phase im Gleichstrom mit der Gasphase unterhalb des Demisters in die Gasphase eingespritzt wird.

Als wäßrige Phase wird bevorzugt Wasser, Kondensat oder verdünnte Schwefelsäure einer Konzentration bis zu 70 Gew.-%, besonders bevorzugt von 2 bis 20 Gew.-%, eingesetzt.

Vorzugsweise werden Schwefelsäuren einer Konzentration von 50 bis 90 Gew.-%, besonders bevorzugt von 65 bis 85 Gew.-%, auf Konzentration von 70 bis 97 Gew.-%, besonders bevorzugt von 80 bis 92 Gew.-%, ganz besonders bevorzugt von 88 bis 92 Gew.-%, im erfindungsgemäßen Verfahren aufkonzentriert.

Die Aufkonzentrierung der gebrauchten Schwefelsäuren kann auch mit einer Säurestrippung als Reinigungsstufe kombiniert werden.

Die wäßrige Phase wird vorzugsweise im Gleichstrom mit den Brüden oberhalb des Sumpfproduktes und unterhalb des Demisters in den Brüdenstrom eingedüst.

Die wäßrige Phase kann aber auch im Gegenstrom zu den Brüden (Gasphase) oberhalb des Sumpfproduktes in den Brüdenstrom eingedüst werden, wobei die Eindüsung oberhalb oder unterhalb des Demisters erfolgen kann.

Bevorzugt wird das Verfahren bei einem Unterdruck von 5 bis 950 mbar, besonders bevorzugt bei 30 bis 400 mbar, durchgeführt.

Der Demister besteht bevorzugt aus einem Gestrick, Geflecht, Gewebe oder einer Packung und weist vorzugsweise eine Dicke von 1 bis 100 cm, besonders bevorzugt von 3 bis 35 cm, auf.

Die Gasphase (Brüden) wird bevorzugt so mit der wäßrigen Phase, vorzugsweise Wasser, abgespritzt, daß die wäßrige, nunmehr Schwefelsäure enthaltene Phase frei in den Sumpf (aufkonzentrierte Schwefelsäure) ablaufen kann.

Beispielsweise wurden die Brüden aus den Aufkonzentrierungsstufen bei Drucken von 800 bis 20 mbar jeweils am Kopf einer Kolonne mit wenig Wasser abgespritzt, wobei die 150° bis 190°C heißen Brüden bis auf ca. 120°C abgekühlt wurden. So wurden zum Beispiel bei einem Brüdenstrom von 1 000 kg/h in Abhängigkeit vom Druck ca. 55 kg Wasser/h von 30°C bei 400 mbar Unterdruck benötigt, um die Schwefelsäure aus den Brüden zu entfernen, ca. 85 kg Wasser/h von 30°C bei 100 mbar Unterdruck und ca. 110 kg Wasser/h von 30°C bei 30 mbar Unterdruck. Das ablaufende Wasser, das nunmehr die Schwefelsäure enthielt, hatte eine Schwefelsäurekonzentration von etwa 75 Gew.-%. Die gebrauchte Schwefelsäure wurde dabei von 78 gew.-% auf 92 Gew.-% aufkonzentriert. Die Kondensate der Brüden enthielten ohne bzw mit Abspritzung folgende Schwefelsäurekonzentrationen:

| | ohne Abspritzung | mit Abspritzung |
|---|---|---|
| bei 400 mbar | 2 000 ppm H₂SO₄ | 100 ppm H₂SO₄ |
| bei 100 mbar | 25 000 ppm H₂SO₄ | 500 ppm H₂SO₄ |
| bei 30 mbar | 85 000 ppm H₂SO₄ | 1 500 ppm H₂SO₄ |

## Patentansprüche

1. Verfahren zur Aufkonzentrierung gebrauchter Schwefelsäuren, in welchem
a) gebrauchte Schwefelsäure einem Verdampfer zugeführt wird,
b) diese gebrauchte Schwefelsäure auf Temperaturen aufgeheizt wird, die ausreichen, daß bei Unterdruck Wasser verdampft und sich eine wasserdampfbeladene Gasphase bildet, die außerdem Schwefelsäure enthält, und daß ein aufkonzentriertes Sumpfprodukt anfällt,
c) die Gasphase oberhalb des Sumpfproduktes mit einer wäßrigen Phase in einer Menge von 10 bis 1 000 kg/h, vorzugsweise 40 bis 150 kg/h, pro 1 000 kg Gasphase/h in Kontakt gebracht wird, so daß die in der Gasphase enthaltene Schwefelsäure von der wäßrigen Phase aufgenommen wird und eine Gasphase, die nahezu von Schwefelsäure befreit ist, erhalten wird,
d) die wäßrige, Schwefelsäure enthaltene Phase in Form von Tropfen, die sich am Demister bilden, der oberhalb des Sumpfes angebracht ist, in den Sumpf zurückgeführt wird,
**dadurch gekennzeichnet, daß** die wäßrige Phase im Gleichstrom mit der Gasphase unterhalb des Demisters in die Gasphase eingespritzt wird.

2. Verfahren gemäß Anspruch 1, **dadurch gekennzeichnet, daß** ein Unterdruck von 5 bis 950 mbar eingestellt wird.

3. Verfahren gemäß einem oder mehreren der Ansprüche 1 bis 2, **dadurch gekennzeichnet, daß** der Demister eine Dicke von 1 bis 100 cm hat und aus einem Gestrick, Geflecht, Gewebe oder Packung besteht.

4. Verfahren gemäß einem oder mehreren der Ansprüche 1 bis 3, **dadurch gekennzeichnet, daß** die eingesetzte, gebrauchte Schwefelsäure eine Anfangskonzentration von 50 bis 90 Gew.-% aufweist.

5. Verfahren gemäß einem oder mehreren der Ansprüche 1 bis 4, **dadurch gekennzeichnet, daß** die gebrauchte Schwefelsäure auf 70 bis 97 Gew.-% aufkonzentriert wird.

## Claims

1. A process for concentrating spent sulphuric acids, wherein
a) spent sulphuric acid is fed to an evaporator,
b) this spent sulphuric acid is heated to temperatures which are sufficient for the evaporation of water under subatmospheric pressure and for the formation of a gas phase which is loaded with water vapour and which additionally contains sulphuric acid, and for a concentrated bottom product to be formed,
c) the gas phase above the bottom product is brought into contact with an aqueous phase in an amount of 10 to 1000 kg/hour, preferably 40 to 150 kg/hour, per 1000 kg/hour of gas phase, so that the sulphuric acid contained in the gas phase is absorbed by the aqueous phase and a gas phase is obtained which is almost free from sulphuric acid,
d) the aqueous phase which contains sulphuric acid is returned to the bottom in the form of drops which are formed on the demister which is mounted above the bottom,
**characterised in that** the aqueous phase is injected into the gas phase below the demister, in co-current flow with the gas phase.

2. A process according to claim 1 or 2, **characterised in that** a subatmospheric pressure of 5 to 950 mbar is set.

3. A process according to one or both of claims 1 and 2, **characterised in that** the demister has a thickness of 1 to 100 cm and consists of a knitted fabric, braiding, woven fabric or packing.

4. A process according to one or more of claims 1 to 3, **characterised in that** the spent sulphuric acid used has an initial concentration of 50 to 90 % by weight.

5. A process according to one or more of claims 1 to 4, **characterised in that** the spent sulphuric acid is concentrated to 70 to 97 % by weight.

## Revendications

1. Procédé pour la concentration d'acides sulfuriques usés, dans lequel
a) on introduit de l'acide sulfurique usé dans un évaporateur,
b) on chauffe cet acide sulfurique usé à des températures qui sont suffisantes pour évaporer l'eau à pression réduite et former une phase gazeuse chargée en vapeur d'eau, laquelle contient en outre de l'acide sulfurique, et pour produire un produit de queue concentré,
c) on met la phase gazeuse au-dessus du produit de queue en contact avec une phase aqueuse dans une quantité de 10 à 1000 kg/h, de préférence de 40 à 150 kg/h, pour 1000 kg de phase gazeuse/h, de telle sorte que l'acide sulfurique contenu dans la phase gazeuse est prélevé par la phase aqueuse et on obtient une phase gazeuse qui est presque exempte d'acide sulfurique,
d) on renvoie dans la queue la phase aqueuse contenant de l'acide sulfurique dans la forme de gouttelettes qui se forment sur un dispositif antibuée, lequel est disposé au-dessus de la queue,
**caractérisé en ce que** la phase aqueuse est injectée dans la phase gazeuse à co-courant avec la phase gazeuse en dessous du dispositif antibuée.

2. Procédé selon la revendication 1, **caractérisé en ce que** l'on ajuste une pression réduite de 5 à 950 mbar.

3. Procédé selon l'une ou plusieurs quelconques des revendications 1 à 2, **caractérisé en ce que** le dispositif antibuée présente une épaisseur de 1 à 100 cm et est constitué d'un tricot, d'une natte, d'un tissu ou d'un garnissage.

4. Procédé selon l'une ou plusieurs quelconques des revendications 1 à 3, **caractérisé en ce que** l'acide sulfurique usé utilisé présente une concentration de départ de 50 à 90 % en poids.

5. Procédé selon l'une ou plusieurs quelconques des revendications 1 à 4, **caractérisé en ce que** l'acide sulfurique usé est concentré à de 70 à 97 % en poids.
